Europäisches Patentamt

European Patent Office

Office européen des brevets

(19)

(11) Veröffentlichungsnummer: **0 281 093**
**A2**

(12) **EUROPÄISCHE PATENTANMELDUNG**

(21) Anmeldenummer: 88103149.6

(22) Anmeldetag: 02.03.88

(51) Int. Cl.⁴ **F16M 11/04**

(30) Priorität: 03.03.87 DE 8703224 U

(43) Veröffentlichungstag der Anmeldung:
07.09.88 Patentblatt 88/36

(84) Benannte Vertragsstaaten:
**CH ES FR GB LI NL SE**

(71) Anmelder: **Horn, Hans Dieter**
**Daimlerstrasse 11**
**D-7062 Rudersberg(DE)**

Anmelder: **Hebbel, Dierk**
**Lortzingstrasse 8**
**D-7151 Allmersbach/i.T.(DE)**

(72) Erfinder: **Horn, Hans Dieter**
**Daimlerstrasse 11**
**D-7062 Rudersberg(DE)**
Erfinder: **Hebbel, Dierk**
**Lortzingstrasse 8**
**D-7151 Allmersbach/i.T.(DE)**

(74) Vertreter: **Patentanwälte Kohler - Schwindling**
**- Späth**
**Hohentwielstrasse 41**
**D-7000 Stuttgart 1(DE)**

(54) **Geräteträger.**

(57) Ein Geräteträger mit einem um eine vertikale Achse drehbar gelagerten Träger, vorzugsweise für ein Sichtgerät, und mit einer an einem Tragarm angeordneten Auflagefläche, insbesondere für eine Tastatur, wobei die Auflagefläche durch Längsverschiebung des Tagarms in ihrem Abstand von der Achse veränderbar ist und in ihrer Stelung mit größtem Abstand von der Achse eine gegenüber der Stellung mit geringstem Abstand abgesenkte Lage einnimmt, ist dadurch gekennzeichnet, daß die Auflagefläche (26) mit dem Tragarm (10) über ein Gelenk (12) mit waagrechter Schwenkachse verbunden ist, daß der Tragarm (10) an seinem der Auflagefläche (26) abgewandten Ende mit einem weiteren Arm (18) über ein weiteres Gelenk (16) schwenkbar verbunden ist, daß der weitere Arm und bei Streckstellung des weiteren Gelenks der Arm in einem den Träger (8) stützenden Teil (4) des Geräteträgers verschiebbar ist, und daß eine Parallelführung für die Auflagefläche (26) vorgesehen ist, die die Auflagefläche bei allen Verschiebestellungen und Schwenkstellungen des Tragarms (10) parallel zu sich selbst hält. Daher kann sich eine auf der Auflagefläche liegende Tastatur nicht leicht verschieben.

Fig.1

## Geräteträger

Die Erfindung betrifft einen Geräteträger mit einem um eine vertikale Achse drehbar gelagerten Träger, vorzugweise für ein Sichtgerät, und mit einer an einem Tragarm angeordneten Auflagefläche, insbesondere für eine Tastatur, wobei die Auflagefläche durch Längsverschiebung des Tragarms in ihrem Abstand von der Achse veränderbar ist und in ihrer Stellung mit größtem Abstand von der Achse eine gegenüber der Stellung mit geringstem Abstand abgesenkte Lage einnimmt.

Bei einem bekannten derartigen Gerät ist die Auflagefläche mit dem Tragarm starr verbunden. Demgegenüber soll die Gebrauchsfähigkeit verbessert werden. Diese Aufgabe wird gemäß der Erfindung dadurch gelöst, daß die Auflagefläche mit einem Tragarm über ein Gelenk mit waagrechter Schwenkachse verbunden ist, daß der Tragarm an seinem der Auflagefläche abgewandten Ende mit einem weiteren Arm über ein weiteres Gelenk - schwenkbar verbunden ist, daß der weitere Arm und bei Streckstellung des weiteren Gelenks der Arm in einem den Träger stützenden Teil des Geräteträgers verschiebbar ist, und daß eine Parallelführung für die Auflagefläche vorgesehen ist, die die Auflagefläche bei allen Verschiebestellungen und Schwenkstellungen des Tragarms parallel zu sich selbst hält.

Ein Vorteil der Erfindung liegt darin, daß die Auflagefläche stets parallel zu sich selbst bleibt und daher eine Tastatur sowohl in der abgesenkten Stellung für den normalen Betrieb als auch in der angehobenen und an die Auflageplatte relativ dicht herangeschobenen Stellung stets parallel zu sich bleibt. Darüber hinaus kann sich bei der Erfindung die auf die Abflagefläche gestellte Tastatur nicht leicht von selbst verschieben.

Bei einer Ausführungsform der Erfindung ist vorgesehen, daß die Auflagefläche mit dem Gelenk über ein drittes Gelenk mit senkrechter Schwenkachse verbunden ist. Der Vorteil liegt dabei darin, daß die Tastatur, die im allgemeinen eine rechteckige Grundfläche hat und bei ausreichenden Platzverhältnissen so angeordnet ist, daß ihre Vorderkante im wesentlichen parallel zur Vorderseite eines auf der Auflageplatte stehenden Geräts, insbesondere eines Bildschirms, verläuft, um die genannte vertikale Achse verdreht werden kann, wenn die Tastatur aus Platzgründen nicht genau zwischen dem Benutzer und dem Bildschirm angeordnet werden kann.

Bei der Ausführungsform der Erfindung ist vorgesehen, daß eine Vorrichtung zum Begrenzen der Absenkung der Auflagefläche gegenüber ihrer Ruhestellung bei in das die Tragplatte stützende Teil eingeschobenem Tragarm vorgesehen ist. Ein Vorteil liegt darin, daß die Höhenlage der Tastatur den unterschiedlichen Anforderungen der Benutzer leicht angepaßt werden kann.

Die soeben genannte Höheneinstellbarkeit der Tastatur läßt sich insbesondere dann leicht verwirklichen, wenn, wie bei einer Ausführungsform der Erfinding vorgesehen ist, die Parallelführung durch ein Lenkerparallelogramm verwirklicht ist.

Ist, wie bei einer Ausführungsform der Erfindung vorgesehen, der Arm aus einem biegesteifen Profil hergestellt, so ergibt sich dabei der Vorteil, daß die Auflagefläche für die Tastatur im Einzelfall bei abgesenkter Stellung freischwebend entweder über einer sonstigen Arbeitsfläche (z.B. Schreibtisch) oder auch seitlich einer solchen Arbeitsfläche angeordnet sein kann, und daß dennoch die Betätigung der Tastatur ohne störendes Nachfedern der Auflagefläche möglich ist.

Ein Vorteil der Erfindung liegt noch darin, daß in der abgesenkten Stellung, auch wenn das Ausmaß der Absenkung im Einzelfall durch einen beweglichen Anschlag gegenüber dem maximal möglichen Ausmaß verringert sein kann, der Benutzer im allgemeinen gezwungen wird, von dem Sichtgerät, insbesondere einem Kathodenstrahl-Bildschirm, einen Mindestabstand einzuhalten, was aus Arbeitsschutzgründen zweckmäßig ist.

Weitere Merkmale und Vorteile der Erfindung ergeben sich aus der nachfolgenden Beschreibung von Ausführungsbeispielen der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein. Es zeigen:

Fig. 1 eine Seitenansicht eines ersten Beispiels des Geräteträgers, wobei die Auflagefläche im abgesenkten Zustand und (mit strichpunktierten Linien) im angehobenen und an die Auflageplatte herangeschobenen Zustand gezeigt ist,

Fig. 2 eine Draufsicht auf Fig. 1,

Fig. 3 einen Schnitt nach der Linie III-III in Fig. 1,

Fig. 4 zeigt einen Längsschnitt durch ein zweites Ausführungsbeispiel eines Geräteträgers;

Fig. 5 zeigt eine schematische Draufsicht auf eine in ihren Abmessungen variable Platte;

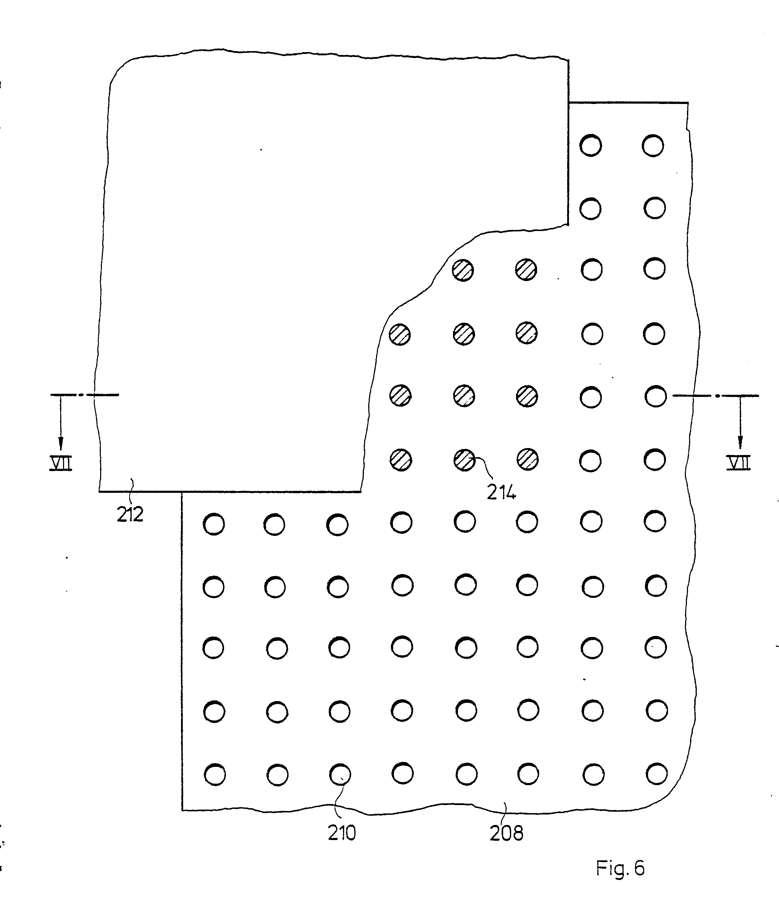

Fig. 6 zeigt eine vergrößerte Draufsicht auf Teile der variablen Platte; und

Fig. 7 zeigt einen Schnitt gemäß der Linie VII-VII in Fig. 6

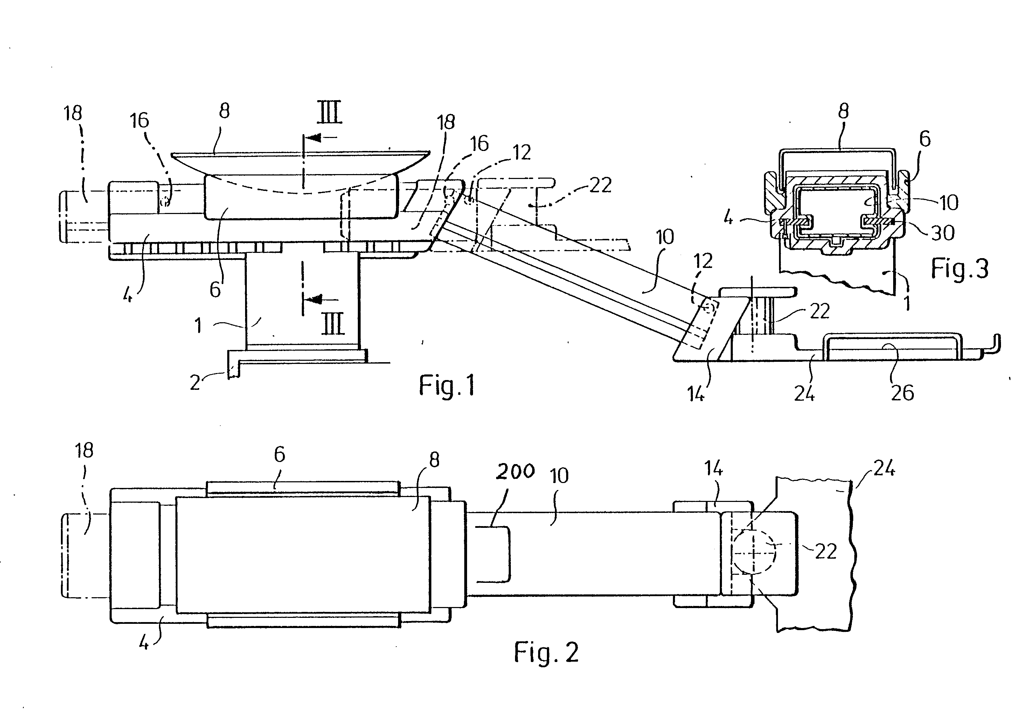

Eine vertikale Säule 1 weist an ihrem unteren Ende mit einer nur angedeuteten Befestigungsvorrichtung 2 zum Befestigen an einer Unterlage, beispielsweise einem Schreibtisch, auf. An ihrem oberen Ende weist die Säule 1 ein Stützteil 4 auf, auf dem in waagrechter Richtung, in Fig. 1 von links nach rechts, ein Schlitten 6 verschiebbar ist, auf dem eine Tragpatte 8 um eine senkrecht zur Zeichenebene der Fig. 1 verlaufende, waagrechte Achse neigbar ist. Das Stützteil 4 ist mittels der Säule 1 um eine vertikale Achse schwenkbar gelagert. Ein in Betriebsstellung der ganzen Vorrichtung von dem Stützteil 4 aus schräg nach vorne (in Fig. 1 schräg nach rechts) verlaufender Tragarm 10 ist mit seinem vorderen Ende mittels eines Gelenks 12 mit rechtwinklig zur Zeichenebene der Fig. 1 verlaufender Schwenkachse an einem Teil 14 befestigt. An seinem anderen Ende ist der Tragarm 10 mittels eines weiteren Gelenks 16, das parallel zum Gelenk 12 verläuft, mit einem weiteren Arm 18 - schwenkbar verbunden. In der in Fig. 1 mit ausgezogenen Linien gezeigten Stellung ist der Tragarm 10 und der weitere Arm 18 relativ zu dem Stützteil 4 so weit nach rechts verschoben worden, daß das Stützteil der Schwenkbewegung des Tragarms 10 nach unten in die in Fig. 1 gezeigte Stellung keinen Widerstand entgegensetzt. Wird der Tragarm 10 nach oben in eine waagrechte Stellung verschwenkt, so kann er nach links ins Innere des Stützteils 4 eingeschoben werden, so daß der Tragarm 10 nicht nach unten schwenken kann, wobei in der am weitesten eingeschobenen Stellung der weitere Arm 18 am hinteren Ende des Stützteils 4 herausragt, wie dies mit strichpunktierten Linien dargestellt ist.

Der weitere Arm 18 und das Teil 14 sind durch einen druck-und zugfesten Lenker, der genauso lang ist wie der Abstand der Gelenke Gelenke 12 und 16 und der parallel zur Verbindungslinie der Gelenke 12 und 16 verläuft, miteinander verbunden. Dadurch bleibt das Teil 14 unabhängig von der jeweiligen Schwenkstellung des Tragarms 10 immer parallel zu sich selbst. Mit dem Teil 14 ist über ein drittes Gelenk 22, dessen Schwenkachse lotrecht und somit parallel zur Schwenkachse der gesamten Vorrichtung verläuft, die durch die Säule 1 bestimmt wird, ein Auflageteil 24 verbunden, das zum Auflegen einer Tastatur vorgesehen ist, die die Anzeige auf einem auf die Tragplatte 8 aufzustellenden Sichtgerät steuert. Durch die oben beschriebene Parallelführung wird die Auflagefläche 26 des Auflageteils 24 stets horizontal gehalten. Das dritte Gelenk 22 gestattet, ausgehend von der Fig. 1 gezeigten Stellung, in der die rechtwinklig zur Zeichenebene der Fig. 1 verlaufende Querrichtung der Tastatur parallel zu der ebenfalls rechtwinklig zur Zeichenebene der Fig. 1 verlaufende Vorderseite des Bildschirmgeräts verläuft, das Auflageteil 24 um etwa 45° nach links und um 45° nach rechts zu verschwenken. Andere Schwenkwinkel sind ebenfalls möglich.

Der Tragarm ist aus einem Hohlprofil hergestellt , das im wesentlichen einen rechteckförmigen Querschnitt aufweist, der an zwei Schmalseiten nach einwärts gezogen ist, wo im Bereich des Stützteils 4 Gleitbeläge 30 eingreifen, um eine leichte Verschiebbarkeit sicherzustellen.

Normalerweise sitzt das Teil 24 bei nach unten geschwenktem Tragarm 10 auf einer Unterlage auf, nämlich auf der Oberseite z.B. eines Schreibtischs, auf dem die gesamte Vorrichtung montiert ist. Es besteht hedoch die Möglichkeit, die Absenkbewegung des Teils 24 zu beschränken; hierzu ist ein beweglicher Anschlag, beispielsweise eine Schraube, vorgesehen, die in geeigneter Weise zwischen zwei der relativ zueinander beweglichen Teile des Lenkerparallelogramms (Tragarm 10, Teil 14, weiterer Arm 18 und der obengenannte Lenker) wirkt, um die Bewegung dieser Teile relativ zueinander auf den gewünschten Wert zu begrenzen.

Der Tragarm 10 und die übrigen Teile sind ausreichend stabil, um auch dann, wenn sich das Teil 24 nicht auf einer festen Unterlage abstützt, die Tastatur so stabil zu unterstützen, daß ein Auf- und Abfedern der Tastatur nicht stattfindet.

Der Tragarn 10 besteht im Ausführungsbeispiel aus Leichtmetall; stattdessen kann auch ein geeigneter Kunststoff verwendet werden.

Der Schlitten 6 ist nur soweit verschiebbar, daß der Schwerpunkt eines auf der Tragplatte 8 stehenden Bildschirmgeräts sich noch oberhalb der Tragsäule 1 befindet, so daß größere auf die Tragsäule wirkende Kippmomente, die durch das Bildschirmgerät hervorgerufen werden können, vermieden werden.

Bei einer Ausführungsform der Erfindung ist die Platte 8 in dem Schlitten 6 um eine senkrechte Achse schwenkbar gelagert, uns zwar um einen begrenzten Winkel, beispielsweise + - 45° gegenüber der Verschieberichtung des Schlittens 6. -Die Begrenzung dieses Schwenkwinkels kann in bekannter Weise erfolgen, beispelweise dadurch, daß ein an der Tragplatte 8 nach unten abstehender Bolzen in eine kreissegmentförmige Aussparung eingreift, so daß an den Enden dieser Aussparung die Schwenkbewegung endet.

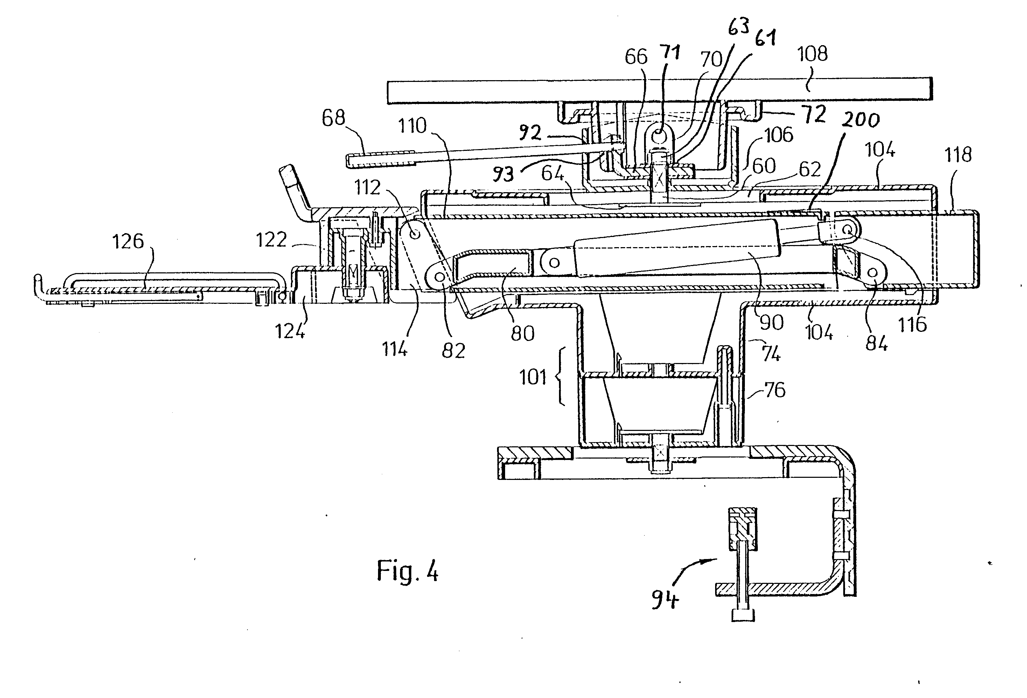

An dem Tragarm 10 ist ein Konzepthalter 200 vorgesehen, der aus einem Drahtbügel geformt ist, dessen rechtwinklig abgebogene Enden in Bohrungen des Tragarmes 10 eingesteckt sind. Das Konzeptblatt wird zwischen der Oberfläche des Armes 10 und dem federnden Drahtbügel des Konzepthalters eingeklemmt. Der Drahtbügel trägt nur wenige Millimeter auf der Oberfläche des Armes 10 auf, so daß er das Einschieben des Armes in den Querschnitt des Stützteiles 4 nicht behindert. Vgl. auch Fig. 4.

Schließlich kann bei Ausführungsformen der Erfindung die Säule 1 in einzelne Ringe unterteilt sein, die einzeln abnehmbar sind. Dadurch kann die Höhe der Säule 1 je nach der Bauhöhe des auf die Platte 8 aufgestellten Gerätes so eingestellt werden, daß der Bildschirm stets in der dem Benutzer geeigneten Höhe ist. Durch diese Ausbildung der Säule erhält man eine sehr einfache und preisgünstige Höheneinstellung der Platte 8 und des ganzen Geräteträgers. Diese Art der Höheneinstellung der Geräteplatte 8 läßt sich auch bei Vorrichtungen verwirklichen, bei denen kein Tragarm 10 mit Auflageteil 24 vorgesehen ist.

Die Säule kann einen hohlen Kern aufweisen, der aus ineinander teleskopartig verschiebbaren Rohren besteht. Die Rohre sind in diesem Falle von den Abstandsringen umgeben, die bei Bedarf herausgenommen oder hinzugefügt werden. Die einzelnen Ringe können bneispielsweise aus halbkreisförmigen Ringsegmenten bestehen, die nach dem Einfügen in die Säule 1 zu einem geschlossenen Ring zugesammengefügt und so befestigt werden. Anstelle der Ringe können jedoch auch u-förmige Abstandsstücke verwendet werden, die auf den Kern der Säulen 1 aufgeschoben werden und in dieser Lage befestigt werden.

Bei dem in Fig. 4 gezeigten zweiten Ausführungsbeispiel sind diejenigen Teile, die dem in den Fig. 1 bis 3 gezeigten ersten Ausführungsbeispiel entsprechen, mit einem um 100 höheren Bezugszeichen bezeichnet. Nicht alle diese Teile sind in der nachfolgenden Beschreibung erwähnt. Der Schlitten 106 ist auf dem Stützteil 104 verschiebbar geführt. Hierzu ragt ein Bolzen 60 mit Gewinde durch ein Langloch 62 im Stützteil 104 hindurch. Am unteren Ende des Bolzens 60 ist eine im Beispiel dreieckige Platte 64 angeordnet, und auf den Bolzen 60 ist unter Zwischenschaltung einer Tellerfeder 61 eine Mutter 63 aufgeschraubt, die den Schlitten 106 unverlierbar am Stützteil 104 hält und gleichzeitig am Schlitten 106 ein Schwenkteil 66 drehbar befestigt, an dem ein Stab 68 befestigt ist, durch den es verdreht werden kann. Der Schlitten 106 hat zwei Verstärkungszonen 70, von denen in Fig. 4 nur eine sichtbar ist. Die Verstärkungszonen 70 weisen Lagerbohrungen 71 auf, die einen Schwenkkopf 72 um eine waagrechte Achse schwenkbar lagern, an dem die Platte 108 befestigt ist. Die Platte 64 bildet wegen ihrer eckigen Form und wegen der begrenzten Breite des Innenraums des Stützteils 104 rechtwinklig zur Zeicheneben der Fig. 4 einen Anschlag für die Schwenkbewegung des Schlittens um die senkrechte Achse. Der Schwenkkopf 72 ist somit in Längsrichtung des Langlochs 62 verschiebbar. um eine in der Lage veränderbare vertikale Achse begrenzt drehbar und außerdem um eine waagrechte Achse verschwenkbar.

Der Schlitten 106 hat einen waagrecht verlaufenden Schlitz 92, und der Schwenkkopf 72 hat einen schräg zur Horizontalebene verlaufenden Schlitz 93, durch die der Stab 68, der geringfügig dünner ist als die Breite der Schlitze, hindurch geht. Wird der Stab 68 seitlich in den Schlitzen 92, 93 bewegt, so wird dadurch der Schwenkkopf 72 in den Lagerbohrungen 71 verschwenkt. Der Stab 68 kann um ungefähr 80° in der Horizontalebene verschwenkt werden. Dieser Bewegung entspricht eine Bewegung des Schwenkkopfes 72 um eine horizontale Achse (Lagerbohrungen 71) von +- 10° bezüglich der Horizontalebene. Die Reibung zwischen dem Schlitten 106 und dem Stützteil 104 ist so gewählt, daß die oben genannte Bewegung des Stabs 68 normalerweise die Stellung des Schwenkkopfes bezüglich seiner vertikalen Schwenkachse nicht beeinflußt. Die Breite des Langlochs 62 ist wenig größer als die Dicke des Bolzens 60.

Die Stange 68 bildet gemeinsam mit den Schlitzen 92 und 93 eine Antriebsvorrichtung für den Träger, die mindestens eine Kurve und eine formschlüssige Kopplung zwischen einer Betätigungsvorrichtung, im Ausführungsbeispiel nämlich der Stange 68, und dem Träger verwendet.

Der ganze Geräteträger kann mittels einer Klemmvorrichtung 94 an einer Tischplatte befestigt werden. Die Säule 101 wird durch einen mit dem Stützteil 104 verbundenen Abschnitt 74 und durch einen an dessen unterem Ende lösbar befestigten ringförmigen Abschnitt 76 gebildet. Bei Bedarf können weitere ringförmige Abschnitte 76 zur passenden Einstellung der Länge der Säule 101 vorgesehen werden oder der gezeigte Abschnitt 76 entfernt werden.

Damit die Auflagefläche 126 des Auflageteils 124 stets zu sich selbst parallel bleibt, ist das Teil 114 durch einen Lenker 80 mit dem weiteren Arm 118 verbunden. Der Abstand der Gelenke 112 und 82 einerseits und 116 und 84 andererseits ist gleich groß, und der Abstand zwischen den Gelenken 82 und 84 ist gleich groß wie der Abstand zwischen den Gelenken 112 und 116. Am Gelenk 116 ist auch das eine Ende einer als Zugfeder arbeitenden Gasfeder 90 schwenkbar befestigt, deren anderes Ende an dem Lenker 80 schwenkbar befestigt ist. Die Gasfeder 90 kann beim Ausziehen des Tragarms 10 in Fig. 4 nach links das Absenken des Auflageteils 124 nicht verhindern, verlangsamt aber das Absenken. Die Gasfeder bewirkt beim Anheben des Auflageteils 124 von Hand eine Gewichtsentlastung. Die Gasfeder weist einen in einem Zylinder abgedichtet gleitenden Kolben auf. Ein Vorteil gegenüber einer mechanischen Feder, z.B. einer Schraubenfeder, liegt in der genaueren Einhaltung vorgeschriebener Eigenschaften und der größeren Konstanz der Federeigenschaften.

Auf der Oberseite des Tragarms 10 und 110 ist ein als flacher Drahtbügel ausgebildeter Konzepthalter 200 angeordnet, der federnd an dem Tragarm anliegt. Wenn der Tragarm schräg geneigt verläuft, kann eine mit dem Konzepthalter festgeklemmte Textvorlage bequem gelesen werden.

Der ganze Geräteträger kann aus Metall hergestellt sein, ist aber bevorzugt hauptsächlich aus Kunststoff hergestellt. Die Schiebeführung des Tragarms in dem Stützteil kann in einer vom Beispiel abweichenden Weise erfolgen.

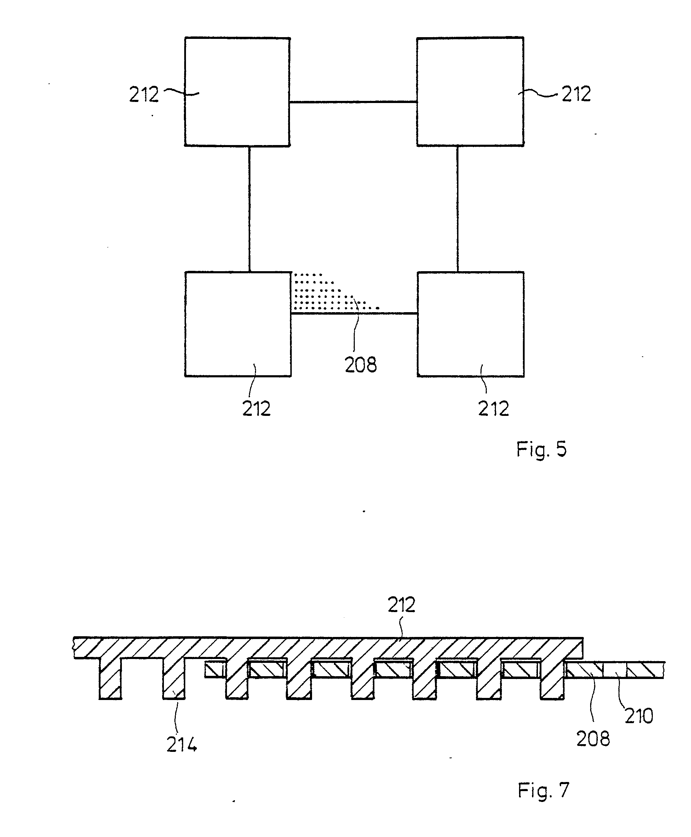

Fig. 5 zeigt eine Ausführungsform der auf dem Schwenkkopf befestigten Platte 108, die in ihrer Größe in beiden Richtungen veränderbar ist. Hierzu ist am Schwenkkopf eine Lochplatte 208 befestigt, die in regelmäßiger Anordnung eine Vielzahl von Aussparungen, im Beispiel durchgehende Löcher 210, trägt. Auf der Lochplatte 208 sind vier Auflageplatten 212, die an ihrer Unterseite in die Löcher 210 passende Vorsprünge 214 tragen, in der gewünschten Lage so aufgesetzt, daß Vorsprünge 214 in Löcher 210 eingreifen. Di Vorsprünge passen so genau in die Löcher, daß eine weitere Befestigung nicht nötig ist. Stattdessen ist es auch möglich, an den Auflageplatten statt der Vorsprünge nur eine oder zwei (oder auch mehr) Bohrungen anzubringen und die Auflageplatten mit der Lochplatte in der gewünschten Stellung durch Schraubverbindungen zu verbinden.

Bei den oben beschriebenen Ausführungsformen ist das auf dem Geräteträger anzuordnende Gerät, z.B. ein Kathodenstrahl-Sichtgerät, auf der Tragplatte 8, 108 bzw. den Platten 208, 212 angeordnet. Diese Tragplatte bildet dabei somit den eingangs genannten Träger. Ein derartiges Gerät kann jedoch auch unmittelbar auf dem Schwenkkopf 72 der Fig. 4 befestigt werden; in einem derartigen Fall bildet dieser Schwenkkopf den eingangs genannten, um ein vertikale Achse drehbar gelagerten Träger.

Die Bezugszeichen in den Patentansprüchen sind keine Beschränkung, sondern sie sollen das Verständnis erleichtern.

**Ansprüche**

1. Geräteträger mit einem um eine vertikale Achse drehbar gelagerten Träger, vorzugsweise für ein Sichtgerät, und mit einer an einem Tragarm angeordneten Auflagefläche, insbesondere für eine Tastatur, wobei die Auflagefläche durch Längsverschiebung des Tragarms in ihrem Abstand von der Achse veränderbar ist und in ihrer Stellung mit größtem Abstand von der Achse eine gegenüber der Stellung mit geringstem Abstand abgesenkte Lage einnimmt, dadurch gekennzeichnet. daß die Auflagefläche (26) mit dem Tragarm (10) über ein Gelenk (12) mit waagrechter Schwenkachse verbunden ist, daß der Tragarm (10) an seinem der Auflagefläche (26) abgewandten Ende mit einem weiteren Arm (18) über ein weiteres Gelenk (16) - schwenkbar verbunden ist, daß der weitere Arm und bei Streckstellung des weiteren Gelenks der Arm in einem den Träger (8) stützenden Teil (4) des Geräteträgers verschiebbar ist, und daß eine Parallelführung für die Auflagefläche (26) vorgesehen ist, die die Auflagefläche bei allen Verschiebestellungen und Schwenkstellungen des Tragarms (10) parallel zu sich selbst hält.

2. Geräteträger nach Anspruch 1, dadurch gekennzeichnet, daß der weitere Arm in dem den Träger stützenden Teil (4) waagrecht verschiebbar angeordnet ist.

3. Geräteträger nach Anspruch 1, oder 2, dadurch gekennzeichnet, daß die Auflagefläche (26) mit dem Gelenk (12) über ein drittes Gelenk (22) mit senkrechter Schwenkachse verbunden ist.

4. Geräteträger nach einem der vorhergehenden Ansprüche, dadurch gekennzeichnet, daß die Parallelführung ein Lenkerparallelogramm aufweist, das aus dem Tragarm, dem weiteren Arm, einem durch das Gelenk mit dem Arm verbundenen Teil und einer parallel zum Arm verlaufenden Strebe gebildet ist.

5. Geräteträger nach einem der vorhergehenden Ansprüche, dadurch gekennzeichnet, daß eine Vorrichtung zum Begrenzen der Absenkung der Auflagefläche gegenüber ihrer Ruhestellung bei in das die Tragplatte stützende Teil eingeschobenem Tragarm vorgesehen ist, wobei vorzugsweise die Vorrichtung zum Begrenzen einen an einem der Teile der Parallelführung angreifenden beweglichen Anschlag aufweist.

6. Geräteträger nach einem der vorhergehenden Ansprüche, dadurch gekennzeichnet, daß auf dem Tragarm ein Konzepthalter (200) angeordnet ist, der vorzugsweise aus einem federnd gegen die Oberfläche des Tragarmes anliegenden Drahtbügel besteht.

7. Geräteträger nach einem der vorhergehenden Ansprüche, dadurch gekennzeichnet, daß der Träger (8, 108) um eine senkrechte Achse - schwenkbar gelagert ist.

8. Geräteträger nach einem der vorhergehenden Ansprüche, dadurch gekennzeichnet, daß die Säule (101) in mehrere Ringe unterteilt ist, von denen mindestens einer (76) zur Einstellung der Höhe des Trägers (108) über der Befestigungsvorrichtung (94) aus der Säule (101) herausnehmbar oder in diese einfügbar ist.

9. Geräteträger nach einem der vorhergehenden Ansprüche, dadurch gekennzeichnet, daß eine Gewichtsentlastung für den Tragarm vorgesehen ist.

10. Geräteträger nach einem der vorhergehenden Ansprüche, dadurch gekennzeichnet, daß eine in der Größe veränderliche Platte zum Aufsetzen eines Geräts vorgesehen ist.

11. Geräteträger nach einem der vorhergehenden Ansprüche, dadurch gekennzeichnet, daß eine Antriebsvorrichtung zum Schwenken des Trägers um eine waagrechte Achse vorgesehen ist, die vorzugsweise mindestens eine Kurve aufweist.

12. Geräteträger nach Anspruch 11, dadurch gekennzeichnet, daß die Antriebsvorrichtung Schlitze (92, 93) aufweist, die relativ zueinander unter einem von 0° verschiedenen Winkel angeordnet sind und mit denen ein Stab (68) zusammenwirkt, der um eine vertikale Achse schwenkbar angeordnet ist.

0 281 093

Fig.1

Fig.3

Fig. 2

Fig. 4

0 281 093

212

212

212

208

212

Fig. 5

212

214

208

210

Fig. 7

7/4

Fig. 6